# EUROPÄISCHE PATENTSCHRIFT

(11) **EP 2 619 072 B1**
(45) Veröffentlichungstag und Bekanntmachung des Hinweises auf die Patenterteilung: **05.04.2017**
(21) Anmeldenummer: 11748899.9
(22) Anmeldetag: 19.08.2011
(51) Int. Cl.: B62D 65/02

(54) **VERFAHREN ZUM VERBINDEN VON BAUTEILEN**
PROCESS TO JOIN PARTS
PROCÉDÉ DE CONNECTION D'ÉLÉMENTS

(30) Priorität: 24.09.2010 DE 102010041356
(43) Veröffentlichungstag der Anmeldung: 31.07.2013
(73) Patentinhaber: Bayerische Motoren Werke Aktiengesellschaft, 80809 München (DE)
(72) Erfinder: HERZINGER, Thomas, 80639 München (DE); VAN NIEKERK, Johann, 80993 München (DE)
(86) Internationale Anmeldenummer: PCT/EP2011/004176
(87) Internationale Veröffentlichungsnummer: WO 2012/038012

(56) Entgegenhaltungen:
- EP-A1- 0 261 297
- EP-A1- 0 592 585
- EP-A1- 1 812 198
- EP-A1- 2 154 054
- EP-A2- 1 645 439
- WO-A1-2009/095267
- DE-A1- 3 441 349
- FR-A1- 2 761 626

## Beschreibung

Die vorliegende Erfindung betrifft ein Verfahren zum Verbinden von Bauteilen gemäß den Merkmalen des Patenanspruches 1.

Eng in Verbindung mit dem Gegenstand der vorliegenden Patentanmeldung stehen Bauteilverbindungen, die aus den beiden nicht vorveröffentlichten deutschen Patentanmeldungen DE 10 2010 028 323.1 sowie aus der DE 2010 040 547.7 bekannt sind.

Zum relevanten Stand der Technik zählen ferner die DE 10 2009 049 602.5, DE 10 2008 038 747 A1, DE 10 2009 041 161 A1, DE 10 2010 028 322 A1, DE 10 2007 044 635 A1, DE 10 2004 046 584 A1, DE 3302177 A1, US 4 942 539, US 2003/0090682 A1, EP 1 772 199 A1, US 5 150 623, DE 197 45 728 A1, DE 696 32 309 T2 sowie die DE 10 2007 061 803 B3.

In der Großserienfertigung von Fahrzeugkarosserien werden eine Vielzahl einzelner Karosserieteile sowie Anbauteile, wie z.B. Halterungen, etc. weitgehend vollautomatisiert von Robotern zusammengebaut. Bei einem Füge- bzw. Verbindungsvorgang werden zwei oder mehrere Karosserieteile zunächst mittels aufwändiger Spann- und Aufnahmetechnik relativ zueinander positioniert und anschließend miteinander verbunden, z.B. durch Schweißen, Clinchen oder durch andere Fügeverfahren
Bei der eingangs erwähnten DE 2010 040 547.7geht es um eine steckbare Klemmverbindung, mittels der zwei oder mehr Karosseriebauteile in einfacher Weise (vor-)montiert werden können. Von einem ersten der mindestens zwei Bauteile steht ein "männliches Fixierteil" ab, das in einer Einführrichtung in ein lochartiges, an dem anderen Fahrzeugbauteil vorgesehenes "weibliches Fixierelement" eingeführt wird. Das männliche Fixierelement weist einen Funktionskopf auf, der teilweise oder ganz die Form einer Kugel oder teilweise oder ganz eine kugelähnliche Form hat und der im Wesentlichen quer zur Einführrichtung ein Übermaß in Bezug auf das weibliche Fixierelement aufweist, so dass die beiden Fahrzeugkarosseriebauteile an den Fixierelementen aneinander geklemmt sind.

Im Fahrzeugkarosseriebau werden miteinander zu verbindende Karosserieteile üblicherweise mittels "bauteilspezifischer" Halte- bzw. Greif- bzw. Transporteinrichtungen gehalten, erfasst bzw. transportiert. "Bauteilspezifisch" bedeutet, dass die betreffenden Einrichtungen individuell auf die Geometrie eines bestimmten Bauteils hin konstruiert und konzipiert sind. Häufig ist es so, dass von einer derartigen "Einrichtung" ein oder mehrere Positionierungs- oder Haltestifte abstehen, in die das betreffende Karosseriebauteil eingehängt wird. Hierzu sind am Karosseriebauteil entsprechende Aufnahmelöcher vorgesehen. Über die Aufnahmelöcher ist das zu fügende Fahrzeugkarosseriebauteil eindeutig in Bezug auf die betreffende Anlage bzw. das betreffende Werkzeug (d.h. in Bezug auf ein Werkzeugkoordinatensystem) positioniert.

Ein Verfahren zum Verbinden von Bauteilen gemäß dem Oberbegriff des Anspruchs 1 ist aus der EP0592585A1 bekannt.

Derartige Anlagen bzw. Vorrichtungen sind mit hohen Anschaffungsinvestitionen verbunden. Im Betrieb belegen sie kostbare Produktionsfläche, was wiederum mit Kosten verbunden ist. Wenn mehrere Karosseriebauteile zu einem Bauteilverbund miteinander verbunden werden sollen, ergeben sich durch die unterschiedlichen hierfür benötigten Vorrichtungen, Maschinen und Prozesse jeweils Bauteil- und Montagetoleranzen, die sich zu einer Gesamttoleranz des Bauteilverbunds aufaddieren. Um die Gesamttoleranz in tolerierbaren Grenzen zu halten, müssen die Einzeltoleranzen sehr eng gewählt werden, was die "Robustheit" des Fertigungsprozesses einschränkt und mit hohen Kosten verbunden ist.

Aufgabe der Erfindung ist es, ein Verfahren zum Verbinden von Bauteilen, insbesondere von Fahrzeugkarosseriebauteilen, anzugeben, das möglichst mit bauteilunspezifischen- bzw. geometrieunspezifischen Einrichtungen durchführbar ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Der Erfindung liegt die Idee zugrunde, beim Fügen von Bauteilen, insbesondere von Karosseriebauteilen für Fahrzeuge, das "Bauteilhandling" (Transport, Halten und Ausrichten von Bauteilen) und das Fügen der einzelnen Bauteile nicht wie bisher durch bauteil- bzw. geometrischspezifische Vorrichtungen durchzuführen. Vielmehr wird vorgeschlagen, bauteil- bzw. geometrieunspezifische Einrichtungen bzw. Anlagen (z. B. Greifsysteme) zu verwenden, die nicht nur einen bestimmten Bauteiltyp handhaben können, sondern mehrere, vorzugsweise eine unbestimmte Vielzahl verschiedener Bauteiltypen bzw. Geometrien.

Der oben verwendete Begriff "Fahrzeugbauteil" ist äußerst breit zu interpretieren. Er umfasst prinzipiell alle Arten von Bauteilen, die es bei einem Fahrzeug zu verbinden gilt, insbesondere Karosseriebauteile. Wenn im Folgenden von einem "Fahrzeugbauteil" die Rede ist, so ist dies nicht einschränkend zu interpretieren. Die Erfindung ist vielmehr ganz allgemein zur Verbindung von Bauteilen (auch in anderen Industriezweigen) zu verstehen. Dementsprechend breit sind die Patentansprüche zu interpretieren.

Während bei herkömmlichen Fertigungsverfahren ein zu verarbeitendes Bauteil in exakt definierter (vorgegebener) Weise an einer Anlage (z. B. Greifsystem) gehalten und somit in exakt vordefinierter Weise relativ dazu positioniert sein muss, wird gemäß der Erfindung zunächst die Geometrie eines zu fügenden Bauteils und dessen Lage bzw. Position im Raum detektiert, z.B. über bildgebende Sensoreinrichtungen o.ä., wobei es nicht darauf ankommt, dass sich das betreffende Bauteil in einer exakt vorgegebenen Relativposition in Bezug auf die (z. B. Greifsystem) befindet. Die zur Detektierung der Bauteilgeometrie und der Bauteillage relevanten Bauteilmerkmale können durch die Form eines Bauteils gegeben sein oder speziell zu diesem Zweck in ein Bauteil eingebracht werden.

Beispielsweise kann in ein durch Tiefziehen hergestelltes Blechteil unmittelbar bei der Herstellung, d.h. während des Tiefziehvorgangs, eine Markierung (die z.B. die Form eines Fadenkreuzes haben kann) in das Blechteil eingeprägt werden. Derartige "Enddruckmarkierungen" können mittels optoelektronischer Einrichtungen detektiert und zur Erfassung der Bauteilposition im Raum sowie für spätere Maßhaltigkeitskontrollen einzelner Bauteile eines Bauteilverbunds relativ zueinander genutzt werden.

Gemäß der Erfindung erfolgt die Ausrichtung einzelner miteinander zu verbindender Bauteile nicht relativ zu einem Koordinatensystem einer Anlage. Miteinander zu verbindende Bauteile werden vielmehr lediglich relativ zueinander ausgerichtet, d.h. unabhängig von der tatsächlichen Position und Ausrichtung eines Bauteils bzw. des Bauteilverbunds in Bezug auf ein orts- oder anlagenfestes Koordinatensystem.

Wenn man einen Bauteilverbund sukzessive durch Verbinden einzelner Bauteile zusammensetzt, so wird zu Beginn die Lage eines ersten Bauteils, d.h. eines Bauteils von dem man ausgehen möchte, im Raum ermittelt. Weitere, mit dem ersten Bauteil zu verbindende Bauteile werden in Bezug auf ein "Bauteilkoordinatensystem", das fest in Bezug auf das erste Bauteil ist, ausgerichtet.

Die relative Bewegung der miteinander zu verbindenden Bauteile zueinander kann softwaregesteuert mittels Standardaktuatoren, z.B. Robotern, geometrieunspezifischen Greifern, etc. erfolgen.

Durch die Möglichkeit, auf geometrischspezifische Vorrichtungen bzw. Halteeinrichtungen, Greifer zu verzichten, verringert sich der produktbezogene Investitionsaufwand. Da geometrieunspezifische Anlagen für unterschiedliche Bauteile verwendet werden können, kommt man insgesamt mit weniger Anlagen aus. Dementsprechend geringer ist der Flächenbedarf in der Produktion.

Durch die Verwendung bauteilunspezifischer Halte- bzw. Greifvorrichtungen (allgemein Anlagen) können viele verschiedene Bauteilvarianten oder auch verschiedene Bauteile mit ein- und derselben Anlage gefertigt werden (Abtauschflexibilität) und die Anlage somit maximal ausgelastet werden. Im Laufe eines Produktlebenszyklus' eingeführte Änderungen der Bauteilgeometrie können bei der Verwendung bauteilunspezifischer Anlagen durch entsprechende Anpassung der Software gehandelt werden, ohne dass hierzu Hardware-Änderungen erforderlich sind.

Auch eine Überprüfung der Maßhaltigkeit des Bauteilverbunds wird vorteilhafterweise relativ zu dem durch das erste Bauteil bzw. durch die Lage des ersten Bauteils im Raum definierte Bauteilkoordinatensystem durchgeführt. Dabei können idealerweise aber nicht notwendigerweise ausschließlich dieselben Sensoreinrichtungen verwendet werden, die auch zur Ausrichtung der Bauteile eingesetzt werden.

Formuliert man die Erfindung etwas konkreter, so geht man von einem ersten Bauteil, bei dem es sich beispielsweise um ein Karosseriebauteil für eine Fahrzeugkarosserie handeln kann, aus. Das erste Bauteil wird im Raum fixiert, z.B. mittels eines Roboters, der einen Greifer aufweisen kann, welcher nicht notwendigerweise individuell auf ein ganz bestimmtes erstes Bauteil abgestimmt sein muss. Vielmehr kann eine "Standardgreifeinrichtung" verwendet werden, die zum Greifen einer Vielzahl unterschiedlicher Geometrien geeignet ist.

Wenn das erste Bauteil im Raum fixiert ist, braucht dessen exakte Lage im Raum (noch) nicht bekannt sein bzw. kann unbekannt sein. Die exakte Lage des ersten Bauteils im Raum wird gemäß der Erfindung mittels einer "Positionserkennungseinrichtung" ermittelt, welche die Lage des ersten Bauteils im Raum eindeutig beschreibende Lageinformationen erzeugt. Der Begriff "Positionserkennungseinrichtung" ist äußerst breit auszulegen. Er umfasst grundsätzlich sämtliche Einrichtungen, die zur Ermittlung und Beschreibung der Lage eines Gegenstands im Raum verwendet werden kann, insbesondere bildgebende Einrichtungen bzw. Verfahren, die mit Kamerasystemen und Auswerteelektroniken arbeiten.

Wenn die exakte Lage des ersten Bauteils im Raum ermittelt wurde, wird an dem ersten Bauteil mindestens ein "erstes Fixierelement" angebracht oder erzeugt. Bei dem ersten Fixierelement kann es sich beispielsweise um ein separates Element handeln, das von außen her an das erste Bauteil herangebracht und mit diesem verbunden wird. Alternativ dazu könnte das erste Fixierelement auch durch Umformen des ersten Bauteils an einer bestimmten Stelle aus dem Material des ersten Bauteils erzeugt werden.

Das Anbringen bzw. Erzeugen des mindestens einen ersten Fixierelements erfolgt mittels einer elektronisch gesteuerten (Fertigungs-)Einrichtung, die das mindestens eine erste Fixierelement unter Verwendung der zuvor ermittelten Lageinformationen, welche die Lage des ersten Bauteils im Raum beschreiben, in einer vorgegebenen Position relativ zu dem ersten Bauteil anordnet bzw. erzeugt. Das erste Fixierelement wird also in Bezug auf ein durch das erste Bauteil definierte Bearbeitungskoordinatensystem angebracht bzw. erzeugt.

In einem weiteren Schritt wird ein zweites Bauteil an dem ersten Bauteil lösbar fixiert. Die Verbindung erfolgt über mindestens ein an dem zweiten Bauteil vorgesehenes zweites Fixierelement, das mit dem am ersten Bauteil vorgesehenen ersten Fixierelement eine lösbare Verbindung bildet. Auf diese Weise können Bauteilverbünde nach einem ähnlichen Prinzip aufgebaut werden, wie man es aus dem Spielzeugbereich von z. B. Klemmbausteinen her kennt.

Vorzugsweise wird das zweite Bauteil automatisiert an dem ersten Bauteil fixiert. Dies kann mit einer elektronisch gesteuerten Einrichtung erfolgen, der die zuvor ermittelten Lageinformationen, welche die exakte Lage des ersten Bauteils im Raum beschreiben, zugeführt werden. Alternativ oder ergänzend dazu kann die Lage des mindestens einen ersten Fixierelements mittels einer Positionserkennungseinrichtung detektiert werden bzw. es können die für das Anbringen oder Erzeugen des ersten Fixierelements an dem ersten Bauteil verwendeten Lageinformationen, welche die vorgegebene Position des ersten Fixierelements relativ zu dem ersten Bauteil beschreiben, verwendet werden. Unter Verwendung dieser oder derartiger Lageinformationen kann das zweite Bauteil mittels der elektronisch gesteuerten Einrichtung relativ zu dem ersten Bauteil bzw. relativ zu dem mindestens einen ersten Fixierelement ausgerichtet werden.

Selbstverständlich kann das zweite Bauteil auch von Hand an dem ersten Bauteil durch Zusammenstecken der einander zugeordneten Fixierelemente fixiert werden.

Das lösbare aneinander Fixieren der beiden Bauteile erfolgt so, dass das eine Fixierelement entlang einer Einführrichtung an das an dem anderen Bauteil vorgesehene andere Fixierelement herangeführt bzw. in das an dem anderen Bauteil vorgesehene Fixierelement eingeführt und festgeklemmt wird. Nach dem lösbaren Verbinden der beiden Bauteile sind diese in Richtungen quer zu der Einführrichtung unverschieblich relativ zueinander (lösbar) fixiert.

Die Fixierelemente können so ausgebildet sein, dass sie eine Clip- oder Schnappverbindung bilden. Es kann vorgesehen sein, dass das eine Fixierelement an dem anderen Fixierelement eingerastet wird bzw. dass das eine Fixierelement in eine das andere Fixierelement hintergreifende Position gebracht wird. Zwischen den Fixierelementen kann also ein entgegen der Einführrichtung wirkender Formschluss vorgesehen sein. Ein derartiger Formschluss bzw. Hinterschnitt muss aber nicht notwendigerweise vorgesehen sein.

Die beiden Bauteile können mittels eines Fixierelementpaars rein kraftschlüssig aneinander geklemmt werden. Alternativ dazu können die beiden Bauteile mittles eines Fixierelementpaars kraftschlüssig und formschlüssig aneinander geklemmt werden.

Nach dem lösbaren (Vor-)Fixieren der beiden Bauteile über die Fixierelemente können die Bauteile unlösbar miteinander verbunden werden, z.B. durch Verschweißen. Ein wesentlicher Vorteil der Erfindung ist darin zu sehen, dass für das unlösbare Verbinden keine weiteren Spann- bzw. Klemmvorrichtungen benötigt werden, welche (während des z.B. Schweißvorgangs) die beiden Bauteile zusammendrücken. Vielmehr genügt es, dass die beiden Bauteile vor bzw. während des Verschweißens ausschließlich durch die lösbar miteinander verbundenen Fixierelemente relativ zueinander gehalten werden.

Nach einer Weiterbildung der Erfindung wird als erstes Fixierelement ein "männliches Fixierelement" verwendet, d.h. ein Element, das von dem ersten Bauteil in irgendeiner Weise "absteht". Bei dem zweiten Fixierelement handelt es sich vorzugsweise um ein mit dem männlichen Fixierelement zusammenwirkendes weibliches Fixierelement. Durch Zusammen- bzw. Ineinanderstecken der beiden Fixierelemente können die Bauteile aneinander geklemmt werden. Der Begriff "weibliches Fixierelement" ist ebenfalls äußerst breit auszulegen. Gemeint sind konstruktive Gestaltungen, die es ermöglichen, das männliche Fixierelement in einer Einführrichtung in das weibliche Fixierelement einzuführen. Die (Fahrzeug-)Bauteile können also, ähnlich wie dies von Steckbaukästen aus dem Spielwarenbereich bekannt ist, einfach zusammengesteckt und auf diese Weise relativ zueinander (vor-)fixiert werden.

Das männliche Fixierelement weist im Wesentlichen quer zur Einführrichtung ein Übermaß in Bezug auf das weibliche Fixierelement auf, wodurch die beiden Bauteile nach dem Zusammenstecken an den Fixierelementen aneinander geklemmt werden.

Nach einer Weiterbildung der Erfindung wird als erstes Fixierelement ein Element verwendet, welches als kugelförmiges oder kugelähnliches Element ausgebildet ist oder welches einen kugelförmigen oder kugelähnlichen Abschnitt aufweist. Das männliche Fixierelement kann vollständig aus Metall, insbesondere aus Stahl oder Aluminium bestehen. Es kann beispielsweise stoffschlüssig mit dem ersten Bauteil verbunden werden, z.B. durch Verschweißen. Insbesondere kann eine als erstes Fixierelement fungierende Kugel unmittelbar auf das erste Bauteil aufgeschweißt werden.

Alternativ dazu kann auch ein erstes Fixierelement verwendet werden, welches einen Funktionskopf aufweist, der teilweise oder ganz die Form einer Kugel oder ganz oder teilweise eine kugelähnliche Form hat und einen mit dem Funktionskopf (z. B. einstückig) verbundenen Fußbereich. Der Fußbereich kann z.B. mittels eines kalten Fügeverfahrens (z.B. Stanznieten, Einpressen) formschlüssig mit dem ersten Bauteil verbunden werden.

Der oben verwendete Begriff "kugelähnlich" ist ebenfalls sehr breit zu interpretieren und nicht auf den mathematischen Begriff einer Kugelgeometrie beschränkt. "Kugelähnlich" kann z.B. "konvex gewölbt" bedeuten. Vorzugsweise ist das kugelförmige oder kugelähnlich gestaltete männliche Fixierelement rotationssymmetrisch bezüglich einer Normalenrichtung eines oder beider Fahrzeugbauteile an der Stelle des männlichen Fixierelements. Die Begriffe "kugelartig" oder "kugelähnlich" umfassen ganz allgemein "runde" bzw. "gewölbte", insbesondere "konvex gewölbte" Geometrien".

Ein derart gestaltetes männliches Fixierelement kann sehr mit dem zweiten (Fahrzeug-)Bauteil zusammengesteckt werden. Durch eine runde, kantenlose Geometrie des männlichen Fixierelements minimiert sich die Gefahr, dass sich die beiden (Fahrzeug-)Bauteile beim Zusammenstecken ungewollt verkannten.

Wird ein erstes Fixierelement verwendet, das durch einen Funktionskopf und einen damit verbundenen Fußbereich gebildet ist, so kann der Fußbereich, ganz allgemein gesprochen, die Funktion eines Verbindungselements übernehmen, über welches der Funktionskopf mit dem ersten Bauteil verbunden wird.

Der Fußbereich kann kostengünstig als "Einpresselement" ausgebildet sein. Er kann mit gängigen Einpressverfahren (wie z.B. Stanznieten) hochpräzise in das zweite Bauteil "eingepresst" werden, derart, dass sich durch das Einpressen eine unlösbare, d.h. eine dauerhaft feste, formschlüssige Verbindung mit dem ersten Bauteil ergibt. Der Fußbereich kann z.B. als selbststanzender Niet ausgeführt sein. Das Einpressen des Fußabschnitts kann vollautomatisiert mittels einer entsprechenden Robotereinrichtung durchgeführt werden.

Alternativ dazu kann eine Einpresseinrichtung in ein Umformwerkzeug integriert sein. Beispielsweise kann in ein Tiefziehwerkzeug eine Stanznieteinrichtung integriert sein, die es ermöglicht, während oder gegen Ende eines Tiefziehvorgangs, durch den das erste (Blech-)Bauteil dreidimensional umgeformt wird, das männliche Fixierelement zu setzen. Alternativ dazu könnte der Fußbereich auch als Schraubenschaft ausgeführt und dazu bestimmt sein, in eine zugeordnete Gewindebohrung des ersten Bauteils eingeschraubt zu werden.

(Fahrzeug-)Bauteile, wie z.B. einzelne Karosserieteile, können durch ein oder mehrere derartige Fixierelementpaare miteinander verbunden, d.h. (vor-)montiert werden. Die einzelnen Bauteile brauchen dabei lediglich "zusammengesteckt" werden. Je nach Art der (Fahrzeug-)Bauteile und der konstruktiv vorgesehenen "Klemmkraft" können die beiden (Fahrzeug-)Bauteile ausschließlich über derartige Fixierelementpaare miteinander verbunden sein oder zusätzlich über eine oder mehrere andere Verbindungstechniken, wie z.B. Schweißen, Schrauben, Nieten, Clinchen, etc. In Betracht kommen dabei insbesondere auch solche Verbindungstechniken, die von einer einzigen Bauteilseite her durchführbar sind ("einseitige Verbindungsverfahren"). Exemplarisch sei hier das Laserschweißen genannt, bei dem im Unterschied zu Punktschweißverfahren der "Bauteilverbund" nicht von beiden Seiten her mittels einer Schweißzange zugänglich sein muss, sondern von einer einzigen Seite her gearbeitet werden kann.

Das weibliche Fixierelement kann durch ein in dem zweiten (Fahrzeug-)Bauteil vorgesehenes "Durchgangsloch" gebildet sein. Der Begriff "Durchgangsloch" ist breit zu interpretieren und nicht per se auf eine bestimmte Lochgeometrie beschränkt. Das Durchgangsloch kann z.B. kreisförmig sein oder eine von einer Kreisform abweichende Geometrie aufweisen, wie z.B. eine im Wesentlichen quadratische Geometrie, eine drei-, vier- oder mehreckförmige Geometrie, wobei die "Ecken" ausgerundet sein können.

Da das mindestens eine männliche Fixierelement quer zur Einführrichtung ein gewisses Übermaß in Bezug auf das weibliche Fixierelement aufweist, müssen die beiden Fixierelemente - oder zumindest eines der beiden Fixierelemente - eine gewisse "Mindestelastizität" aufweisen, so dass das Zusammenstecken ermöglicht wird und nach dem Zusammenstecken eine hinreichende Klemmkraft bestehen bleibt.

Bei dem männlichen Fixierelement bzw. bei dem Funktionskopf des männlichen Fixierelements kann es sich z.B. um eine Kugel aus Vollmaterial handeln, insbesondere um eine Stahl- oder Aluminiumkugel. Eine derartige "Vollkugel" weist eine vergleichsweise geringe Elastizität auf. Die für ein Zusammenstecken erforderliche Mindestelastizität kann durch eine entsprechende Gestaltung des weiblichen Fixierelements erreicht werden.

Es kann vorgesehen sein, dass die beiden (Fahrzeug-)Bauteile nach dem Zusammenstecken an den Fixierelementen in Richtungen, die quer zur Einführrichtung sind, spielfrei miteinander verbunden, d.h. unverschieblich relativ zueinander fixiert sind.

Wie bereits erwähnt, können die beiden (Fahrzeug-)Bauteile über mehrere derartige oder ähnliche Bauteilverbindungen relativ zueinander (vor-)fixiert werden. Dementsprechend kann an einem der beiden (Fahrzeug-)Bauteile mindestens ein weiteres derartiges (siehe vorangegangene Beschreibung) männliches Fixierelement vorgesehen sein, das ebenfalls teilweise oder ganz die Form einer Kugel bzw. teilweise oder ganz eine kugelähnliche Form hat und das in einer bzw. in derselben Einführrichtung wie das erste männliche Fixierelement in ein zugeordnetes weiteres weibliches Fixierelement eingeführt werden kann bzw. eingeführt ist, das an dem betreffenden anderen (Fahrzeug-)Bauteil vorgesehen ist.

Das mindestens eine weitere weibliche Fixierelement kann durch einen Schlitz bzw. durch ein längliches Durchgangsloch gebildet sein, in dem das weitere männliche Fixierelement bzw. ein Funktionskopf des weiteren männlichen Fixierelements in einer Längsrichtung des Schlitzes bzw. des länglichen Durchgangslochs verschieblich ist.

Anschaulich gesprochen bildet die eine "Bauteilverbindung" ein "Festlager" und die mindestens eine weitere Bauteilverbindung ein "Loslager". Dies hat den Vorteil, dass die beiden miteinander zu verbindenden (Fahrzeug-)Bauteile "schwimmend" und somit im Wesentlichen spannungsfrei zusammengesteckt bzw. aneinander fixiert werden können.

Nach einer Weiterbildung der Erfindung ist an einem Rand des das weibliche Fixierelement bildenden Durchgangslochs mindestens ein von dem zweiten (Fahrzeug-)Bauteil abstehendes, biegeelastisches Klemmelement vorgesehen. Das Klemmelement übt von außen her eine im Wesentlichen quer zur Einführrichtung wirkende Klemmkraft auf eine Außenseite des Funktionskopfs des männlichen Fixierelements aus. Das Klemmelement kann den Funktionskopf des männlichen Fixierelements hintergreifen. Dies muss aber nicht unbedingt der Fall sein. Im Falle eines Hinterschnitts kommt es beim Zusammenfügen, d.h. beim Zusammenstecken der beiden Fixierelemente zu einem "Überdrücken" und somit zu einem hörbaren Einrasten des Funktionskopfs des männlichen Fixierelements in bzw. an dem weiblichen Fixierelement.

Bei dem Klemmelement kann es sich um einen sich entlang des gesamten Rands des Durchgangslochs erstreckenden Klemmkragen handeln. Alternativ dazu kann auch lediglich ein sich über einen Umfangsabschnitt erstreckendes Klemmkragenelement vorgesehen sein. Ferner können entlang des Durchgangslochs mehrere in Umfangsrichtung voneinander beabstandete Klemmkrägen vorgesehen sein, die den Funktionskopf des männlichen Fixierelements jeweils auf einem Umfangsabschnitt oder jeweils an einer Umfangsstelle von außen her berühren. Es kann auch vorgesehen sein, dass lediglich ein Teil der vorgesehenen Klemmkrägen von außen her gegen den Funktionskopf des männlichen Fixierelements drückt.

Es kann vorgesehen sein, dass der Klemmkragen bzw. die Klemmkrägen in Einführrichtung bzw. entgegen der Einführrichtung von dem zweiten (Fahrzeug-)Bauteil absteht bzw. abstehen. Der mindestens eine Klemmkragen muss nicht ganz senkrecht in Bezug auf das zweite Fahrzeugteil umgebogen werden, sondern kann leicht schräg angestellt werden. Beispielsweise kann vorgesehen sein, dass der mindestens eine Klemmkragen mit der Oberfläche des zweiten (Fahrzeug-)Bauteils im Bereich des Durchgangslochs einen Winkel einschließt, der im Bereich zwischen 80° und 90° liegt.

Bei dem ersten und/oder bei dem zweiten (Fahrzeug-)Bauteil kann es sich um ein Blechbauteil, insbesondere um ein Karosseriebauteil, handeln. Alternativ dazu kann es sich bei dem ersten und/oder bei dem zweiten (Fahrzeug-)Bauteil auch um ein Kunststoffbauteil, insbesondere um ein aus einem faserverstärkten Kunststoff bestehendes Kunststoffbauteil handeln.

Das das weibliche Fixierelement bildende Durchgangsloch kann aus dem zweiten (Fahrzeug-)Bauteil ausgestanzt sein. Bei dem Klemmkragen kann es sich um einen "umgebogenen" bzw. "hochgestellten" oder hochstehenden Abschnitt des ausgestanzten Durchgangslochs handeln.

Bei einem oder bei beiden der Fahrzeugteile kann es sich insbesondere um Tiefziehteile handeln. Das mindestens eine weibliche Fixierelement, das z.B. durch ein Durchgangsloch gebildet sein kann, kann unmittelbar im Tiefziehwerkzeug ausgestanzt oder in einem nachfolgenden Fertigungsschritt hergestellt werden.

Im Folgenden wird die Erfindung im Zusammenhang mit der Zeichnung näher erläutert. Es zeigen:
- Figur 1: Ein Blech mit einer aufgeschweißten Stahlkugel;
- Figuren 2, 3: ein Blech mit einem Durchgangsloch mit umlaufenden Klemmkragen;
- Figuren 4-6: verschiedene Ausführungsbeispiele mit unterschiedlichen Klemmkrägen;
- Figur 7: zwei schwimmend aneinander fixierte Bauteile gemäß der Erfindung;
- Figur 8: ein erstes Ausführungsbeispiel eines männlichen Fixierelements gemäß der Erfindung;
- Figur 9: ein zweites Ausführungsbeispiel eines männlichen Fixierelements gemäß der Erfindung; und
- Figur 10: eine schematische Darstellung, welche das Verfahren zum Verbinden zweier Bauteile gemäß der vorliegenden Erfindung beschreibt.

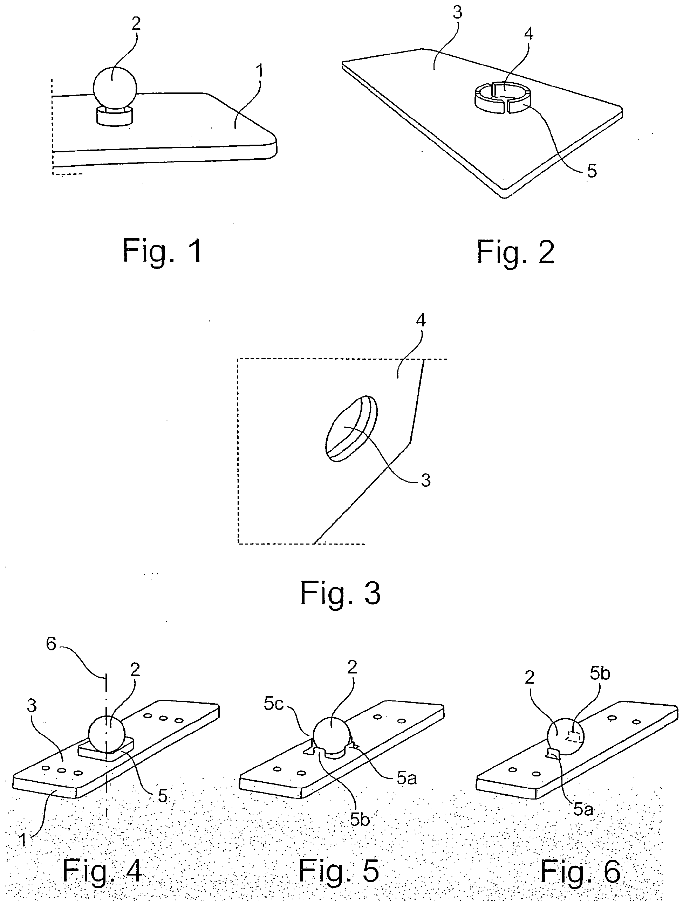

Figur 1 zeigt ein erstes Blech 1, auf dem ein männliches Fixierelement fixiert ist, das einen als Stahlkugel 2 ausgebildeten Funktionskopf aufweist.

Die Figuren 2, 3 zeigen ein zweites Blech 3, in das ein Durchgangsloch 4 gestanzt ist, welches einen umgebogenen Kragen 5 aufweist, der als Klemmkragen fungiert. Das Durchgangsloch 4 bzw. der Klemmkragen 5 haben einen geringfügig kleineren Durchmesser als die den Funktionskopf bildende Kugel 2. Der Klemmkragen ist jedoch hinreichend elastisch, so dass die Kugel 2 in bzw. durch das Durchgangsloch 4 gedrückt werden kann.

Das Durchgangsloch 4 kann, wie in den Figuren 2, 3 gezeigt, eine annähernd viereckige bzw. quadratische Form haben. Im Falle einer annähernd quadratischen Durchgangslochgeometrie, drückt der Klemmkragen 5 punktförmig an vier jeweils ca. 90° voneinander beabstandeten Stellen von außen her gegen die Kugel 2.

Figur 4 zeigt die beiden Bleche 1, 3 in zusammengestecktem Zustand. Die an dem Blech 1 fixierte Kugel wurde von unten her durch das Durchgangsloch 4 hindurchgesteckt. Der Klemmkragen 5 drückt im Wesentlichen quer zu einer Einführrichtung 6 von außen her gegen die Kugel 2. Die beiden Bleche 1, 3 sind damit in Richtungen, die quer zur Einführvorrichtung 6 sind, fest und im Wesentlichen spielfrei relativ zueinander positioniert.

Figur 5 zeigt ein Ausführungsbeispiel, bei dem anstatt eines umlaufenden Klemmkragens in Umfangsrichtung gleichmäßig verteilt mehrere zahnartige Klemmkragenelemente 5a, 5b, 5c vorgesehen sind.

Beim Ausführungsbeispiel der Figur 6 sind lediglich zwei derartige zahnartige Klemmkragenelemente 5a, 5b vorgesehen, die in Umfangsrichtung ca. 180° voneinander beabstandet sind. Die beiden Klemmkragenelemente 5a, 5b sind auf einander gegenüberliegenden Seiten der Kugel 2 angeordnet.

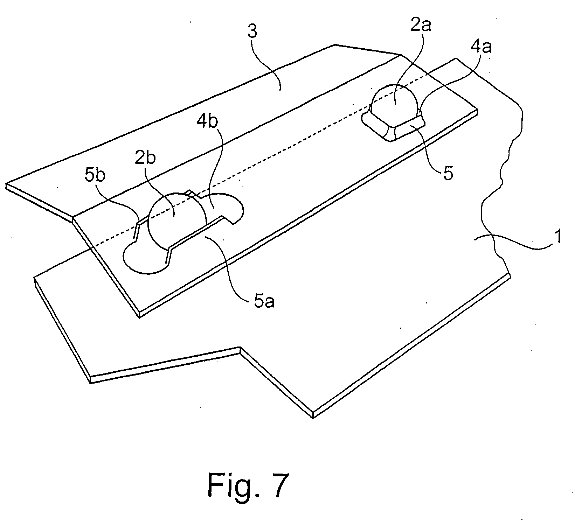

Figur 7 zeigt ein Ausführungsbeispiel, bei dem auf einem ersten Blech 1 beabstandet voneinander eine erste Kugel 2a und eine zweite Kugel 2b angeordnet sind. Die beiden Kugeln 2a, 2b sind jeweils über einem hier nicht näher zu erkennenden Fußbereich des jeweiligen männlichen Fixierelements mit dem Blech 1 verbunden. Die Fußbereiche bzw. Fußabschnitte können z.B. über kalte Fügeverfahren mit dem Blech 1 verbunden worden sein. In Betracht kommen verschiedenste Arten von "Einpressverfahren", wie z.B. Stanznietverfahren.

In dem zweiten Blech 3 ist ein erstes der Kugel 2a zugeordnetes rechteckiges bzw. quadratisches Durchgangsloch 4a vorgesehen, das einen umlaufenden Klemmkragen 5 aufweist, ähnlich wie er in den Figuren 2 - 4 gezeigt ist. Im Bereich der Kugel 2a sind die beiden Bleche 1, 3 somit fest quer zur Einführrichtung relativ zueinander fixiert.

Bei dem zweiten Durchgangsloch 4b hingegen handelt es sich um ein längliches Durchgangsloch, mit zwei in Lochlängsrichtung verlaufenden Klemmkrägen 5a, 5b, die voneinander gegenüberliegenden Seiten her gegen die Außenseite der Kugel 2b drücken. Bei der in Figur 7 gezeigten Anordnung sind die Bleche "schwimmend" aneinander fixiert. Durch das Langloch 4b werden Spannungen zwischen den Befestigungsstellen vermieden.

Die beiden Bleche 1, 3 können einfach zusammengesteckt und anschließend z.B. durch Schweißen dauerhaft fest miteinander verbunden werden. Die beim Schweißen auftretenden Wärmedehnungen werden aufgrund der schwimmenden Anordnung der beiden Bleche "automatisch" ausgeglichen.

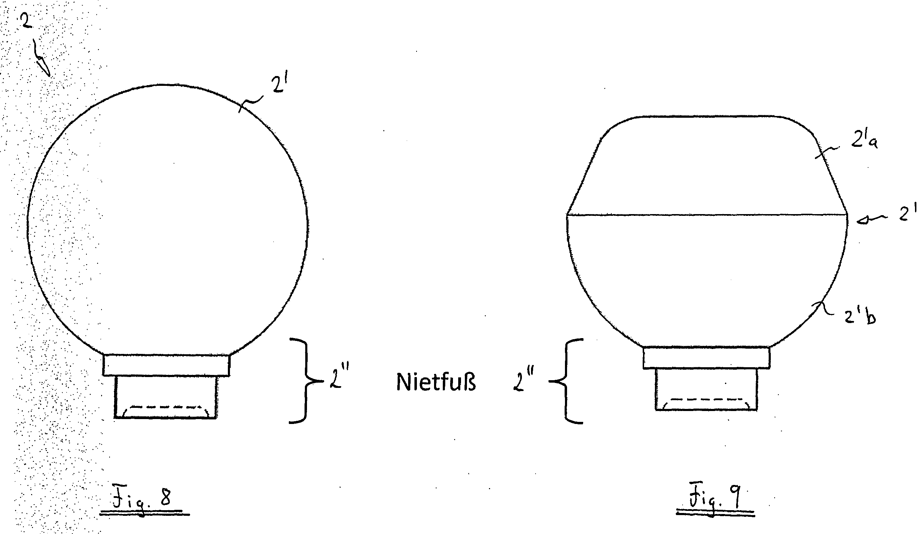

Figur 8 zeigt ein männliches Fixierelement 2, welches einen kugelförmigen Funktionskopf 2' und einen einstückig damit verbundenen Fußbereich bzw. Fußabschnitt 2" aufweist. Der Fußbereich 2" ist hier in der Form eines (selbststanzenden) Stanzniets ausgebildet. Beim Setzen, d.h. beim Einpressen des als Stanzniet ausgebildeten Fußbereichs 2", dringt der stirnseitige Bereich des Fußbereichs 2" in das erste Blech 1 (vgl. Figur 1) ein und weitet sich dabei radial auf, wodurch sich eine dauerhaft feste, formschlüssige Verbindung mit dem ersten Blech 1 ergibt.

Figur 9 zeigt ein Ausführungsbeispiel, bei dem der Funktionskopf 2' einen oberen, konisch nach oben hin zulaufenden, gerundeten Bereich 2'a und einen sich nach unten daran anschließenden kugelförmigen Bereich 2'b aufweist, der analog zum Ausführungsbeispiel der Figur 8 als Stanzniet ausgebildet ist.

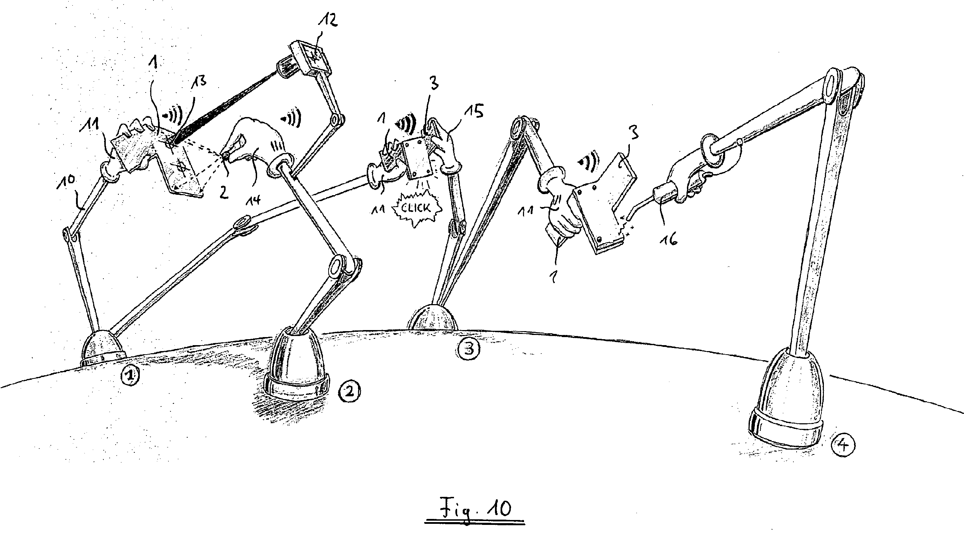

Figur 10 beschreibt das Grundprinzip des Verfahrens zum Verbinden von Bauteilen gemäß der Erfindung. Ein erstes Bauteil 1 wird mittels einer ersten Halte- bzw. Greifeinrichtung 10, bei der es sich beispielsweise um einen Roboter handeln kann, erfasst und im Raum fixiert. Der in Figur 10 gezeigte handartige Greifer 11 soll verdeutlichen, dass es sich um einen nicht individuell auf das erste Bauteil 1 abgestimmten Greifer handelt, sondern um einen bauteilunspezifischen Standardgreifer, der dazu in der Lage ist, ganz unterschiedlich gestaltete Bauteile zu erfassen und zu fixieren. Die Relativposition des ersten Bauteils in Bezug auf den Greifer 11 muss nicht exakt bekannt sein bzw. kann sogar unbekannt sein.

Zur Ermittlung der exakten Lage des ersten Bauteils 1 im Raum wird eine Positionserkennungseinrichtung 12 verwendet. Bei der Positionserkennungseinrichtung 12 kann es sich beispielsweise um ein (z. B. aus mehreren Kameras bestehendes) Kamerasystem handeln, das über eine Bildauswerteelektronik verfügt. Die Positionserkennungseinrichtung 12 ist dazu in der Lage, die Position bestimmter Geometriemerkmale von Bauteilen, wie z.B. Ecken, Kanten, Löcher, eingeprägte Fadenkreuzmarkieren 13 etc. zu detektieren. Durch Detektieren mehrerer derartiger Merkmale bzw. geometrischer Orte kann
a) festgestellt werden, um welches erste Bauteil aus einer der Anlage bekannten Menge erster Bauteile es sich handelt, und
b) die exakte Lage des ersten Bauteils 1 im Raum ermittelt werden.

Die Lage des ersten Bauteils 1 im Raum definiert ein für nachfolgende Arbeitsschritte verwendetes Bearbeitungskoordinatensystem.

Sobald bekannt ist, um welches erste Bauteil 1 es sich handelt und in welcher exakten Position sich das erste Bauteil 1 im Raum befindet, wird an dem ersten Bauteil 1 ein erstes Fixierelement angebracht bzw. erzeugt. Bei der in Figur 10 gezeigten Darstellung wird mittels eines zweiten Greifarms 14 eine als erstes Fixierelement fungierende Kugel 2 in einer vorgegebenen Position relativ zu dem ersten Bauteil 1 auf dem ersten Bauteil 1 appliziert. Die Kugel 2 kann beispielsweise mittels eines hier nicht näher dargestellten Schweißroboters mit dem ersten Bauteil 1 verschweißt werden.

Wie in Figur 10 schematisch angedeutet ist, können mehrere derartige als erste Fixierelemente fungierende Kugeln auf das erste Bauteil 1 aufgeschweißt werden. Mittels einer weiteren Greifeinrichtung (z.B. Roboter) 15 wird ein zweites Bauteil 3, das an den Stellen, an denen die Kugeln auf das erste Bauteil 1 aufgeschweißt werden, mit Durchgangslöchern versehen ist, auf das erste Bauteil 1 aufgesteckt. Die Durchgangslöcher fungieren dabei als zweite Fixierelemente.

Die beiden Bauteile 1, 3 werden, wie in Figur 10 dargestellt ist, durch mehrere derartige Fixierelementpaare kraft- und/oder formschlüssig zusammengesteckt. Die Fixierelementpaare können so konzipiert sein, dass sie ein Zusammenclipsen der beiden Bauteile 1, 3 ermöglichen. Hierbei handelt es sich um eine lösbare Verbindung der beiden Bauteile 1, 3. Die beiden Bauteile 1, 3 sind über die Fixierelementpaare aber hinreichend fest zusammen gehalten, dass, ohne weitere Klemm- oder Spanneinrichtungen, die beiden Bauteile 1, 3 in einem weiteren Verfahrensschritt mittels einer Schweißeinrichtung 16 miteinander verschweißt werden können.

## Patentansprüche

1. Verfahren zum Verbinden von Bauteilen (1, 3), mit folgenden Schritten:
• Bereitstellen eines ersten Bauteils (1),
• Fixieren des ersten Bauteils (1) im Raum, wobei die exakte Lage des ersten Bauteils (1) im Raum nicht bekannt sein muss oder unbekannt ist,
• Ermitteln der exakten Lage des ersten Bauteils (1) im Raum mittels einer Positionserkennungseinrichtung (12), welche der Lage des ersten Bauteils (1) entsprechende Lageinformationen erzeugt, und das Verfahren ist durch die folgenden Schritte gekennzeichnet:
• Anbringen oder Erzeugen mindestens eines ersten Fixierelements (2) an dem ersten Bauteil (1) mittels einer elektronisch gesteuerten Einrichtung (14), die das mindestens eine erste Fixierelement (2) unter Verwendung der ermittelten Lageinformationen in einer vorgegebenen Position relativ zu dem ersten Bauteil (1) anbringt oder erzeugt,
• Fixieren eines zweiten Bauteils (3) an dem ersten Bauteil (1), wobei ein an dem zweiten Bauteil (3) vorgesehenes zweites Fixierelement (4) mit dem ersten Fixierelement (2) eine lösbare Verbindung bildet.

2. Verfahren nach Anspruch 1,
**dadurch gekennzeichnet, dass** die exakte Lage des ersten Bauteils (1) mittels eines Kamerasystems (12) und einer Auswerteelektronik ermittelt wird.

3. Verfahren nach Anspruch 1 oder 2,
**dadurch gekennzeichnet, dass** das zweite Bauteil (3) mittels einer elektronisch gesteuerten Einrichtung (15) an dem ersten Bauteil (1) fixiert wird, wobei der elektronisch gesteuerten Einrichtung (15) die Lageinformationen zugeführt werden oder wobei der elektronisch gesteuerten Einrichtung (15) von einer Positionserkennungseinrichtung (12) generierte Lageinformationen des mindestens einen ersten Fixierelements (12) zugeführt werden.

4. Verfahren nach einem der Ansprüche 1 bis 3,
**dadurch gekennzeichnet, dass** mittels der Positionserkennungseinrichtung (12) die Position des mindestens einen ersten Fixierelements (2) ermittelt und das zweite Bauteil (3) mit dem dem ersten Fixierelement (2) zugeordneten zweiten Fixierelement (4) daran ausgerichtet wird.

5. Verfahren nach einem der vorangehenden Ansprüche,
**dadurch gekennzeichnet, dass** das zweite Bauteil (3) von Hand an dem ersten Bauteil (1) fixiert wird.

6. Verfahren nach einem der Ansprüche 1 bis 5,
**dadurch gekennzeichnet, dass** beim lösbaren aneinander Fixieren der beiden Bauteile (1, 3) das erste Fixierelement (2) entlang einer Einführrichtung (6) in das an dem anderen Bauteil (3) vorgesehene zweite Fixierelement (4, 4a, 4b) eingeführt und daran festgeklemmt wird.

7. Verfahren nach einem der Ansprüche 1 bis 6,
**dadurch gekennzeichnet, dass** die beiden Bauteile (1, 3) nach dem lösbaren Verbinden in Richtungen quer zur Einführrichtung (6) unverschieblich relativ zueinander fixiert werden.

8. Verfahren nach einem der Ansprüche 1 bis 7,
**dadurch gekennzeichnet, dass** die beiden Fixierelemente (2, 4, 4a, 4b) eine Clip- oder Schnappverbindung bilden, wobei das eine Fixierelement (2) an dem anderen Fixierelement (4, 4a, 4b) eingerastet wird bzw. in eine das andere Fixierelement (4, 4a, 4b) hintergreifende Position gebracht wird.

9. Verfahren nach einem der Ansprüche 1 bis 8,
**dadurch gekennzeichnet, dass** die beiden Bauteile (1, 3) an den Fixierelementen (2, 4, 4a, 4b) kraftschlüssig aneinander geklemmt werden.

10. Verfahren nach einem der Ansprüche 1 bis 9,
**dadurch gekennzeichnet, dass** die beiden Bauteile (1, 3) kraftschlüssig und formschlüssig aneinander geklemmt werden.

11. Verfahren nach einem der Ansprüche 1 bis 10,
**dadurch gekennzeichnet, dass** die Bauteile (1, 3) nach dem lösbaren Verbinden unlösbar miteinander verbunden werden.

12. Verfahren nach einem der Ansprüche 1 bis 11,
**dadurch gekennzeichnet, dass** die beiden Bauteile (1, 3) nach dem lösbaren Verbinden miteinander verschweißt werden.

13. Verfahren nach Anspruch 12,
**dadurch gekennzeichnet, dass** die beiden Bauteile vor bzw. während des Verschweißens ausschließlich durch lösbar miteinander verbundene erste und zweite Fixierelemente (2, 4, 4a, 4b) relativ zueinander gehalten werden.

14. Verfahren nach einem der Ansprüche 1 bis 13,
**dadurch gekennzeichnet, dass** es sich bei dem mindestens einen ersten Fixierelement (2) oder bei dem mindestens einen zweiten Fixierelement um ein männliches und bei dem damit zusammenwirkenden anderen Fixierelement (4, 4a, 4b) um ein weibliches Element handelt, wobei die beiden Bauteile (1, 3) durch Zusammenstecken der beiden Fixierelemente (2, 4, 4a, 4b) aneinander geklemmt werden.

15. Verfahren nach Anspruch 14,
**dadurch gekennzeichnet, dass** ein männliches Fixierelement (2) verwendet wird, welches im Wesentlichen quer zur Einführrichtung (6) ein Übermaß in Bezug auf das weibliche Fixierelement (4, 5) aufweist, wobei die beiden Bauteile (1, 3) an den Fixierelementen (2, 4, 5) aneinander geklemmt werden.

16. Verfahren nach einem der Ansprüche 1 bis 15,
**dadurch gekennzeichnet, dass** ein erstes Fixierelement (2) verwendet wird, welches als kugelförmiges oder kugelähnliches Element ausgebildet ist oder welches einen kugelförmigen oder kugelähnlichen Abschnitt (2') aufweist.

17. Verfahren nach einem der vorangehenden Ansprüche,
**dadurch gekennzeichnet**, das als männliches Fixierelement (2) ein vollständig aus Metall, insbesondere aus Stahl oder Aluminium, bestehendes Element verwendet wird.

18. Verfahren nach einem der Ansprüche 1 bis 17,
**dadurch gekennzeichnet, dass** das mindestens eine erste Fixierelement (2) mit dem ersten Bauteil (1) verschweißt wird.

19. Verfahren nach einem der vorangehenden Ansprüche,
**dadurch gekennzeichnet, dass** ein erstes Fixierelement (2 , 2a, 2b) verwendet wird, welches
• einen Funktionskopf (2') aufweist, der teilweise oder ganz die Form einer Kugel oder ganz oder teilweise eine kugelähnliche Form hat, und
• einen mit dem Funktionskopf (2') verbundenen Fußabschnitt (2"), wobei der Fußabschnitt (2") mittels eines kalten Fügeverfahrens formschlüssig mit dem ersten Bauteil (1) verbunden wird bzw. wurde.

20. Verfahren nach einem der Ansprüche 14 bis 19,
**dadurch gekennzeichnet, dass** das weibliche Fixierelement (4, 5) durch Erzeugen eines Durchgangslochs in einem der beiden Bauteile (1, 3) hergestellt wird.

21. Verfahren nach Anspruch 20,
**dadurch gekennzeichnet, dass** ein Durchgangsloch (4) erzeugt wird, das eine von einer Kreisform abweichende Form hat.

22. Verfahren nach Anspruch 21,
**dadurch gekennzeichnet, dass** ein Durchgangsloch (4) erzeugt wird, das einem Quadrat oder einem Dreieck ähnelt.

23. Verfahren nach einem der Ansprüche 21 oder 22,
**dadurch gekennzeichnet, dass** bei der Herstellung des Durchgangslochs (4) ein Rand (5) des Durchgangslochs (4) umgebogen wird, so dass er ein von dem betreffenden Bauteil (3) abstehendes, biegeelastisches Klemmelement (5, 5a, 5b, 5c) bildet, das von außen her eine im Wesentlichen quer zur Einführrichtung (6) wirkende Klemmkraft auf eine Außenseite des männlichen Fixierelements (2, 2a, 2b) ausübt.

24. Verfahren nach einem der vorangehenden Ansprüche,
**dadurch gekennzeichnet, dass** das Durchgangsloch (4, 4a, 4b) aus dem zweiten Bauteil (3) ausgestanzt ist.

25. Verfahren nach einem der vorangehenden Ansprüche,
**dadurch gekennzeichnet, dass** es sich bei dem mindestens einen Klemmelement (5, 5a, 5b, 5c) um einen umgebogenen Abschnitt des zweiten Bauteils (3) handelt.

26. Verfahren nach einem der vorangehenden Ansprüche,
**dadurch gekennzeichnet, dass** nach dem Zusammenstecken der beiden Bauteile (1, 3) das mindestens eine Klemmelement (5, 5a, 5b, 5c) und das damit zusammenwirkende männliche Fixierelement (2, 2a, 2b) hintergreift.

27. Verfahren nach einem der vorangehenden Ansprüche,
**dadurch gekennzeichnet, dass** es sich bei dem Klemmelement (5, 5a, 5b, 5c) um einen sich entlang des gesamten Rands des Durchgangslochs (4) erstreckenden Klemmkragen (5) handelt.

28. Verfahren nach einem der vorangehenden Ansprüche,
**dadurch gekennzeichnet, dass** entlang des Rands des Durchgangslochs (4) mehrere in Umfangsrichtung voneinander beabstandete Klemmkrägen (5a, 5b, 5c) vorgesehen sind, die auf einem Umfangsabschnitt das männliche Fixierelement (2, 2a, 2b) von außen her berühren.

29. Verfahren nach einem der vorangehenden Ansprüche,
**dadurch gekennzeichnet, dass** der Klemmkragen bzw. die Klemmkrägen (5, 5a, 5b, 5c) so umgebogen wird bzw. werden, dass er bzw. sie in Einführrichtung (6) bzw. entgegen der Einführrichtung (6) von dem zweiten Bauteil (3) absteht bzw. abstehen.

30. Verfahren nach einem der vorangehenden Ansprüche,
**dadurch gekennzeichnet, dass** an einem der beiden Bauteile (1, 3) ein weiteres männliches Fixierelement (2b) angebracht oder erzeugt wird, das teilweise oder ganz die Form einer Kugel oder teilweise oder ganz eine kugelähnliche Form hat und das in einer bzw. in derselben Einführrichtung (6) in ein zugeordnetes weiteres, an dem anderen Bauteil vorgesehenes weibliches Fixierelement (4b) eingeführt wird.

31. Verfahren nach Anspruch 30,
**dadurch gekennzeichnet, dass** das weitere weibliche Fixierelement (4b) durch Erzeugen eines Schlitzes bzw. eines länglichen Durchgangslochs hergestellt wird, in dem das weitere männliche Fixierelement (2b) in einer Längsrichtung des Schlitzes bzw. des länglichen Durchgangslochs verschiebbar ist.

32. Verfahren nach einem der vorangehenden Ansprüche,
**dadurch gekennzeichnet, dass** als erstes und/oder zweites Bauteil (1, 3) ein Blechbauteil, insbesondere ein Stahl- oder Aluminiumblechbauteil, verwendet wird.

33. Verfahren nach einem der vorangehenden Ansprüche,
**dadurch gekennzeichnet, dass** es sich bei dem ersten und/oder bei dem zweiten Bauteil (1, 3) um ein Karosseriebauteil einer Fahrzeugkarosserie handelt.

## Claims

1. A method for connecting components (1, 3), having the following steps:
• providing a first component (1),
• fixing the first component (1) in space, with the exact location of the first component (1) in space not needing to be known or being unknown,
• ascertaining the exact location of the first component (1) in space by means of a position recognition means (12) which generates location information which corresponds to the location of the first component (1),
and the method is **characterised by** the following steps:
• attaching or forming at least one first fixing element (2) to or on the first component (1) by means of an electronically controlled means (14) which attaches or forms the at least one first fixing element (2) using the ascertained location information in a specified position relative to the first component (1),
• fixing a second component (3) to the first component (1), with a second fixing element (4) provided on the second component (3) forming a releasable connection with the first fixing element (2).

2. A method according to Claim 1,
**characterised in that** the exact location of the first component (1) is ascertained by means of a camera system (12) and evaluation electronics.

3. A method according to Claim 1 or 2,
**characterised in that** the second component (3) is fixed to the first component (1) by means of an electronically controlled means (15), the location information being supplied to the electronically controlled means (15), or location information of the at least one first fixing element (2) which is generated by a position recognition means (12) being supplied to the electronically controlled means (15).

4. A method according to one of Claims 1 to 3,
**characterised in that** the position of the at least one first fixing element (2) is ascertained, and the second component (3) with the second fixing element (4) associated with the first fixing element (2) is oriented thereon, by means of the position recognition means (12).

5. A method according to one of the preceding claims,
**characterised in that** the second component (3) is fixed to the first component (1) by hand.

6. A method according to one of Claims 1 to 5,
**characterised in that** when releasably fixing the two components (1, 3) to each other the first fixing element (2) is introduced along a direction of introduction (6) into the second fixing element (4, 4a, 4b) provided on the other component (3) and is clamped securely thereagainst.

7. A method according to one of Claims 1 to 6,
**characterised in that** the two components (1, 3) after being releasably connected are fixed non-displaceably relative to each other in directions transversely to the direction of introduction (6).

8. A method according to one of Claims 1 to 7,
**characterised in that** the two fixing elements (2, 4, 4a, 4b) form a clip connection or snap connection, the one fixing element (2) being latched on the other fixing element (4, 4a, 4b) or being brought into a position engaging behind the other fixing element (4, 4a, 4b).

9. A method according to one of Claims 1 to 8,
**characterised in that** the two components (1, 3) are clamped against each other in non-positive manner on the fixing elements (2, 4, 4a, 4b).

10. A method according to one of Claims 1 to 9,
**characterised in that** the two components (1, 3) are clamped against each other in non-positive manner and in positive manner.

11. A method according to one of Claims 1 to 10,
**characterised in that** the components (1, 3) after being releasably connected are connected together non-releasably.

12. A method according to one of Claims 1 to 11,
**characterised in that** the two components (1, 3) are welded together after being releasably connected.

13. A method according to Claim 12,
**characterised in that** the two components before or during the welding are held relative to each other exclusively by first and second fixing elements (2, 4, 4a, 4b) which are detachably connected together.

14. A method according to one of Claims 1 to 13,
**characterised in that** the at least one first fixing element (2) or the at least one second fixing element is a male element and the other fixing element (4, 4a, 4b) which cooperates therewith is a female element, the two components (1, 3) being clamped against each other by fitting together the two fixing elements (2, 4, 4a, 4b).

15. A method according to Claim 14,
**characterised in that** a male fixing element (2) is used which substantially transversely to the direction of introduction (6) has an oversize with regard to the female fixing element (4, 5), the two components (1, 3) being clamped together on the fixing elements (2, 4, 5).

16. A method according to one of Claims 1 to 15,
**characterised in that** a first fixing element (2) is used which is formed as a spherical or sphere-like element or which has a spherical or sphere-like portion (2').

17. A method according to one of the preceding claims,
**characterised in that** an element consisting completely of metal, especially of steel or aluminium, is used as the male fixing element (2).

18. A method according to one of Claims 1 to 17,
**characterised in that** the at least one first fixing element (2) is welded to the first component (1).

19. A method according to one of the preceding claims,
**characterised in that** a first fixing element (2 , 2a, 2b) is used which
• has a functional head (2') which has partially or entirely the shape of a sphere or entirely or partially a sphere-like shape, and
• a foot portion (2") connected to the functional head (2'), the foot portion (2") being or having been connected in positive manner to the first component (1) by means of a cold joining process.

20. A method according to one of Claims 14 to 19,
**characterised in that** the female fixing element (4, 5) is produced by forming a through-hole in one of the two components (1, 3).

21. A method according to Claim 20,
**characterised in that** a through-hole (4) which has a shape which deviates from a circular shape is formed.

22. A method according to Claim 21,
**characterised in that** a through-hole (4) which is similar to a square or a triangle is formed.

23. A method according to one of Claims 21 or 22,
**characterised in that** in producing the through-hole (4) an edge (5) of the through-hole (4) is bent over so that it forms a flexible clamping element (5, 5a, 5b, 5c) projecting from the component (3) in question, which element from the outside exerts a clamping force acting substantially transversely to the direction of introduction (6) on an outer side of the male fixing element (2, 2a, 2b).

24. A method according to one of the preceding claims,
**characterised in that** the through-hole (4, 4a, 4b) is punched out of the second component (3).

25. A method according to one of the preceding claims,
**characterised in that** the at least one clamping element (5, 5a, 5b, 5c) is a bent-over portion of the second component (3).

26. A method according to one of the preceding claims,
**characterised in that** once the two components (1, 3) have been fitted together the at least one clamping element (5, 5a, 5b, 5c) and the male fixing element (2, 2a, 2b) which cooperates therewith engages behind.

27. A method according to one of the preceding claims,
**characterised in that** the clamping element (5, 5a, 5b, 5c) is a clamping collar (5) extending along the entire edge of the through-hole (4).

28. A method according to one of the preceding claims,
**characterised in that** along the edge of the through-hole (4) a plurality of clamping collars (5a, 5b, 5c) spaced apart from each other in the peripheral direction are provided, which collars on a peripheral portion contact the male fixing element (2, 2a, 2b) from the outside.

29. A method according to one of the preceding claims,
**characterised in that** the clamping collar or the clamping collars (5, 5a, 5b, 5c) is or are bent over such that it or they projects or project from the second component (3) in the direction of introduction (6) or counter to the direction of introduction (6).

30. A method according to one of the preceding claims,
**characterised in that** a further male fixing element (2b) is attached to or formed on one of the two components (1, 3), which element partially or entirely has the shape of a sphere or partially or entirely has a sphere-like shape, and which is introduced in a or in the same direction of introduction (6) into an associated further female fixing element (4b) provided on the other component.

31. A method according to Claim 30,
**characterised in that** the further female fixing element (4b) is produced by forming a slot or an elongate through-hole in which the further male fixing element (2b) is displaceable in a longitudinal direction of the slot or the elongate through-hole.

32. A method according to one of the preceding claims,
**characterised in that** a sheet-metal component, especially a steel or aluminium sheet-metal component, is used as first and/or second component (1, 3).

33. A method according to one of the preceding claims,
**characterised in that** the first and/or the second component (1, 3) is a body component of a vehicle body.

## Revendications

1. Procédé de liaison de pièces (1, 3) comprenant les étapes suivantes consistant à :
- se procurer une première pièce (1),
- fixer cette première pièce (1) dans l'espace, la position exacte de la première pièce (1) dans l'espace ne devant pas être connue ou étant inconnue,
- détecter la position exacte de la première pièce (1) dans l'espace au moyen d'un dispositif d'identification de position (12) qui produit des informations de position correspondant à la position de la première pièce (1),
ce procédé étant **caractérisé par** les étapes suivantes consistant à :
- monter ou former au moins un premier élément de fixation (2) sur la première pièce (1) au moyen d'un dispositif (14) à commande électronique qui monte ou forme le premier élément de fixation (2) dans une position prédéfinie par rapport à la première pièce (1) en utilisant les informations de position détectées,
- fixer une seconde pièce (3) sur la première pièce (1), un second élément de fixation (4) prévu sur la seconde pièce (3) réalisent une liaison amovible avec le premier élément de fixation (2).

2. Procédé conforme à la revendication 1,
**caractérisé en ce que**
la position exacte de la première pièce (1) est détectée au moyen d'un système de caméra (12) et d'une électronique d'exploitation.

3. Procédé conforme à la revendication 1 ou 2,
**caractérisé en ce que**
la seconde pièce (3) est fixée à la première pièce (1) au moyen d'un dispositif à commande électronique (15), les informations de position étant transmises au dispositif à commande électronique (15) ou des informations de position du premier élément de fixation (12) générées par un dispositif d'identification de position (12) étant transmises au dispositif à commande électronique (15).

4. Procédé conforme à l'une des revendications 1 à 3,
**caractérisé en ce que**
la position du premier élément de fixation (2) est détectée au moyen du dispositif d'identification de position (12) et la seconde pièce (3) est alignée sur celle-ci avec le second élément de fixation (4) associé au premier élément de fixation (2).

5. Procédé conforme à l'une des revendications précédentes,
**caractérisé en ce que**
la seconde pièce (3) est fixée manuellement sur la première pièce (1).

6. Procédé conforme à l'une des revendications 1 à 5,
**caractérisé en ce que**
lors de la fixation amovible des deux pièces (1, 3), le premier élément de fixation (2) est introduit le long d'une direction d'introduction (6) dans le second élément de fixation (4, 4a, 4b) prévu sur l'autre pièce (3) et bloqué sur celui-ci.

7. Procédé conforme à l'une des revendications 1 à 6,
**caractérisé en ce qu'**
après leur liaison amovible, les deux pièces (1, 3) sont fixées de façon à ne pas pouvoir être déplacés par translation l'une par rapport à l'autre dans des directions transversales à la direction d'introduction (6).

8. Procédé conforme à l'une des revendications 1 à 7,
**caractérisé en ce que**
les deux éléments de fixation (2, 4, 4a, 4b) forment une liaison par encliquetage ou à déclic, l'un des éléments de fixation (2) étant encliqueté sur l'autre élément de fixation (4, 4a, 4b) ou amené dans une position dans laquelle il s'engage à l'arrière de l'autre élément de fixation (4, 4a, 4b).

9. Procédé conforme à l'une des revendications 1 à 8,
**caractérisé en ce que**
les deux pièces (1, 3) sont bloqués l'une sur l'autre au niveau des éléments de fixation (2, 4, 4a, 4b) par une liaison par la force.

10. Procédé conforme à l'une des revendications 1 à 9,
**caractérisé en ce que**
les deux pièces (1, 3) sont bloquées l'une sur l'autre par une liaison par la force et par une liaison par la forme.

11. Procédé conforme à l'une des revendications 1 à 10,
**caractérisé en ce qu'**
après leur liaison amovible, les deux pièces (1, 3) sont reliées solidairement l'une avec l'autre.

12. Procédé conforme à l'une des revendications 1 à 11,
**caractérisé en ce que**
après leur liaison amovible, les deux pièces (1, 3) sont soudées l'une avec l'autre.

13. Procédé conforme à la revendication 12,
**caractérisé en ce que**
avant ou pendant le soudage, les deux pièces sont maintenues l'une par rapport à l'autre uniquement par les premier et second éléments de fixation (2, 4, 4a, 4b) reliés de façon amovible l'un avec l'autre.

14. Procédé conforme à l'une des revendications 1 à 13,
**caractérisé en ce que**
le premier élément de fixation (2) ou le second élément de fixation est constitué par un élément de fixation mâle et l'autre élément de fixation (4, 4a, 4b) coopérant avec celui-ci est un élément de fixation femelle, les deux pièces (1, 3) étant bloquées l'un sur l'autre par enfichage des deux éléments de fixation (2, 4, 4a, 4b).

15. Procédé conforme à la revendication 14,
**caractérisé en ce que**
l'on utilise un élément de fixation mâle (2) qui comporte, essentiellement transversalement à la direction d'introduction (6), un excès par rapport à l'élément de fixation femelle (4, 5), les deux pièces (1, 3) étant fixées l'une sur l'autre au niveau des éléments de fixation (2, 4, 5).

16. Procédé conforme à l'une des revendications 1 à 15,
**caractérisé en ce que**
l'on utilise un premier élément de fixation (2) qui est réalisé sous la forme d'un élément en forme de sphère ou similaire à une sphère ou qui comporte un segment (2') en forme de sphère ou similaire à une sphère.

17. Procédé conforme à l'une des revendications précédentes,
**caractérisé en ce qu'**
en tant qu'élément de fixation mâle (2), on utilise un élément totalement réalisé en métal, en particulier en acier ou en aluminium.

18. Procédé conforme à l'une des revendications 1 à 17,
**caractérisé en ce que**
le premier élément de fixation (2) est soudé avec la première pièce (1).

19. Procédé conforme à l'une des revendications précédentes,
**caractérisé en ce que**
l'on utilise un premier élément de fixation (2, 2a, 2b) qui :
- comporte une tête fonctionnelle (2') qui a partiellement ou en totalité la forme d'une sphère ou partiellement ou en totalité une forme similaire à une sphère, et
- un segment de base (2") relié à la tête fonctionnelle (2'), le segment de base (2") étant relié ou ayant été relié avec la première pièce (1) par une liaison par la forme au moyen d'un procédé d'assemblage à froid.

20. Procédé conforme à l'une des revendications 14 à 19,
**caractérisé en ce que**
l'élément de fixation femelle (4, 5) est obtenu par réalisation d'un perçage traversant l'une des deux pièces (1, 3).

21. Procédé conforme à la revendication 20,
**caractérisé en ce que**
l'on réalise un perçage traversant (4) qui a une forme différente d'une forme circulaire.

22. Procédé conforme à la revendication 21,
**caractérisé en ce que**
l'on réalise un perçage traversant (4) similaire à un carré ou à un triangle.

23. Procédé conforme à l'une des revendications 21 ou 22,
**caractérisé en ce que**
lors de la réalisation du perçage traversant (4), un bord (5) de ce perçage traversant (4) est replié de façon à former un élément de blocage (5, 5a, 5b, 5c) élastiquement flexible s'écartant de la pièce (3) concernée, qui exerce à partir de l'extérieur une force de blocage agissant essentiellement transversalement à la direction d'introduction (6) sur la face externe de l'élément de fixation mâle (2, 2a, 2b).

24. Procédé conforme à l'une des revendications précédentes,
**caractérisé en ce que**
le perçage traversant (4, 4a, 4b) est estampé sur la seconde pièce (3).

25. Procédé conforme à l'une des revendications 1 à 3,
**caractérisé en ce que**
l'élément de blocage (5, 5a, 5b, 5c) est constitué par un segment recourbé de la seconde pièce (3).

26. Procédé conforme à l'une des revendications précédentes,
**caractérisé en ce qu'**
après l'enfichage des deux pièces (1, 3), l'élément de blocage (5, 5a, 5b, 5c) et l'élément de fixation mâle (2, 2a, 2b) coopérant avec lui s'engagent par l'arrière.

27. Procédé conforme à l'une des revendications précédentes,
**caractérisé en ce que**
l'élément de blocage (5, 5a, 5b, 5c) est constitué par un rebord de blocage (5) s'étendant le long de la totalité du bord du perçage traversant (4).

28. Procédé conforme à l'une des revendications précédentes,
**caractérisé en ce qu'**
il est prévu le long du bord du perçage traversant (4) plusieurs rebords de blocage (5a, 5b, 5c) situées à distance les unes des autres en direction périphérique qui viennent en contact par l'extérieur sur un segment périphérique de l'élément de fixation mâle (2, 2a, 2b).

29. Procédé conforme à l'une des revendications précédentes,
**caractérisé en ce que**
le ou les rebord(s) de serrage (5, 5a, 5b, 5c) est(sont) recourbé(s) de façon à s'écarter de la seconde pièce (3) dans la direction d'introduction (6) ou à l'opposé de cette direction (6).

30. Procédé conforme à l'une des revendications précédentes,
**caractérisé en ce que**
sur l'une des deux pièces (1, 3) est fixé ou formé un autre élément de fixation mâle (2b) qui a partiellement ou en totalité la forme d'une sphère ou une forme similaire à une sphère et qui est introduit dans une ou dans la même direction d'introduction (6) dans un autre élément de fixation femelle (4b) associé prévu sur l'autre pièce.

31. Procédé conforme à la revendication 30,
**caractérisé en ce que**
l'autre élément de fixation femelle (4b) est obtenu par réalisation d'une fente ou d'un perçage traversant oblong dans lequel l'autre élément de fixation mâle (2b) peut être glissé dans la direction longitudinale de la fente ou du perçage traversant oblong.

32. Procédé conforme à l'une des revendications précédentes,
**caractérisé en ce qu'**
en tant que première et/ou seconde pièce (1, 3), on utilise une pièce en tôle, en particulier une pièce en tôle d'acier ou en tôle d'aluminium.

33. Procédé conforme à l'une des revendications précédentes,
**caractérisé en ce que**
la première et/ou la seconde pièce (1, 3) est(sont) constituée(s) par un élément de carrosserie d'un véhicule.
